# EUROPEAN PATENT SPECIFICATION

(11) **EP 3 350 083 B1**
(45) Date of publication and mention of the grant of the patent: **20.04.2022**
(21) Application number: 16784981.9
(22) Date of filing: 19.09.2016
(51) Int. Cl.: B65B 23/12, B65B 35/32, B65B 35/36, B65B 35/44, B65B 57/00, B65B 5/06, B65B 57/14, B65B 23/18

(54) **SYNCHRONIZATION SYSTEM FOR INFEED OF PRODUCT STACKS ONTO A PACKER CHAIN OF A PACKAGING MACHINE, SYNCHRONISATION DEVICE FOR SUCH A SYNCHRONIZATION SYSTEM AND TRANSPORT DEVICE FOR SUCH A SYNCHRONIZATION SYSTEM**
SYNCHRONISATIONSSYSTEM ZUM ZUFÜHREN VON PRODUKTSTAPELN AUF EINE FÖRDERKETTE EINER VERPACKUNGSMASCHINE, SYNCHRONISATIONSEINRICHTUNG FÜR EIN SOLCHES SYNCHRONISATIONSSYSTEM UND TRANSPORTEINRICHTUNG FÜR EIN SOLCHES SYNCHRONISATIONSSYSTEM
SYSTÈME DE SYNCHRONISATION POUR L'ALIMENTATION DE PILES DE PRODUITS SUR UNE CHAINE D'UNE MACHINE À EMBALLER, DISPOSITIF DE SYNCHRONISATION POUR UN TEL SYSTÈME DE SYNCHRONISATION ET DISPOSITIF DE TRANSPORT POUR UN TEL SYSTÈME DE SYNCHRONISATION

(30) Priority: 18.09.2015 NL 2015466
(43) Date of publication of application: 25.07.2018
(73) Proprietor: B.V. Machinefabriek Houdijk, 3133 KS Vlaardingen (NL)
(72) Inventor: DE JONG, Henricus Nicolaas Johannes, 3133 KS Vlaardingen (NL)
(74) Representative: Algemeen Octrooi- en Merkenbureau B.V.
(86) International application number: PCT/NL2016/050645
(87) International publication number: WO 2017/048129

(56) References cited:
- DE-U1-202009 016 645
- US-A1- 2015 136 564

## Description

### Brief description: Synchronization system for infeed in a packer chain of an existing packaging machine of groups of products for the manufacturing of rolls or boxes of cookies, each of the group consisting of a predetermined amount of individual products, such as biscuits or cookies.

### Description

### Technical field

The invention relates to a synchronization system for infeed in a packer chain of an existing packaging machine of groups of products for the manufacturing of rolls or boxes of cookies, each of the group consisting of a predetermined amount of individual products, such as biscuits or cookies.

### Background of the invention

A synchronization system for feeding products to be packed is disclosed in US 2015/136564 A1. DE 20 2009 016645 U1 discloses a system for feeding products to be packed with discharge stations that are located at the take-over position between respective components. Biscuits, or cookies or related dough products are produced in a fully continuous process of kneading, sticking, baking and cooling. The cooled products can then be further treated by providing them, for example, with a layer of chocolate, or by sandwiching them, which means that there on top of an underlying biscuit a layer of cream is provided, on which layer of cream another biscuit is placed, by which a sandwich is thus obtained. For the purpose of increasing the production capacity, the biscuits are usually manufactured in different track in parallel over the width of the furnace, e.g. in 16, 24, 32, 42 parallel tracks, such in accordance of the width of the furnace and the size of the product.

The presently obtained biscuits are often not packaged, but packaged in a group of products, for example, into a roll or box of biscuits. Before it can be packaged, a group of products with the size of the roll is to be composed from the plurality of individual products such as biscuits. The presently obtained group is fed to a packaging machine which produces the finished roll or the suit biscuits. For the purpose of forming the group of biscuits it is known to take over biscuits in a number of parallel tracks, wherein the number of parallel tracks preferably corresponds with the number of biscuits contained in the group. As such, the group biscuits is built up by the tracks, by which, at the end of the conveyer chain, the full group with the size of the roll has been built. The group, or role is then fed to the packaging machine.

Packaging machines for the packaging of individual products, such as said biscuits or cookies generally have a large production capacity and are arranged to manufacture such rolls or boxes of cookies at high speed. However, such known packaging machines require a synchronous supply of products to be able to meet such production capacities. Consequently, the groups of biscuits should be mutually equal in size, i.e. in length and in intermediate distance from each other, the so-called pitch.

Existing packaging machines that are currently known are, amongst others due to their size and complexity, very costly. The lifetime is therefore preferably many years and it is not desirable to replace or modify existing packaging machines which have not yet reached the end of their lifetime. In order to meet the requirement of having a synchronous supply for currently existing packaging machines, without having to redesign the costly packaging machinery and / or to modify it, it is known to feed the asynchronous supply from the furnaces through a buffer on the synchronous supply of the packaging machine. Such buffers in which a large quantity of products can be collected and from thereon provided with the required speed and pitch, however, are large in size, little flexible with respect to the synchronization and will damage to the product to a large degree, especially upon processing extremely fragile biscuits or cookies.

### Summary of the invention

An object of the present invention is to provide an improved system for infeed of groups of products into a packer chain of a packaging machine for the manufacturing of rolls or boxes of biscuits.

It is a further object of the present invention to provide an improved synchronization system for a packer chain for infeed of groups of products into a packer chain of a packaging machine for the manufacturing of rolls or boxes of biscuits, wherein the system is arranged receive individual asynchronously provided biscuits or cookies for provided groups of these products in a synchronized manner to an existing packaging machine into its existing synchronous packer chain of this packaging machine for packaging the groups of biscuits or cookies into a roll or box.

The problems are solved by a device according to claim 1. According to a first aspect of the invention a synchronization system for infeed into a synchronous packer chain of a packaging machine of groups of products for the manufacturing of rolls or boxes of cookies, each of the group consisting of a predetermined amount of individual products such as biscuits or cookies, the system comprising:
- a transport device, comprising a conveyor chain arranged to transport the groups of products in a transverse direction relative to the conveying direction of the conveyor chain towards the synchronous packer chain of the packaging machine;
- a synchronization device, arranged to be positioned between the transport device and the packaging machine, and comprising a plurality of conveyer members for taking over the groups of products between pairs of the plurality of conveyer members in a direction perpendicular to the conveyer chain in a longitudinal direction in respect to the conveying direction of the conveying members, wherein the synchronization device is further arranged to synchronize the groups of products at predetermined mutually equal pitch, and transfer speed with the constant pitch and conveying speed of the synchronous packer chain for accordingly take over by the packer chain of the groups of products by, during the time of taking over a group of products from the conveyer chain and the moment of taking over by the packer chain, increasing and/or decreasing the pitch between the pairs of conveyer members.

In the present invention, is alternately spoken about products, biscuits and cookies. In this context, however, are also similar and related products of dough meant, which may or may not be provided with a layer of chocolate. The invention therefore is directed to all such products, and is not limited to only one thereof. Hereinafter mainly products of dough will be discussed, by which thus also biscuits and the like are meant. Therefore, the products should not be construed limitative, as the inventions will also be applicable to other similar and related products made from dough, whether or not provided with a layer of chocolate.

As already indicated in the introduction, it is known to group individual dough products in order to then bring about this group of dough products on a conveyor chain of a packaging machine for packaging a group of dough products into a roll or box of cookies.

Packaging machines that are used for the packaging of these roles of cookies are often foil packers, whether or not packs in which a foil is wrapped around a plastic tray with biscuits. These foil packers or foil packaging machines contain large rolls of film which continuously rotate at a fixed rate of packaging. The foil is wrapped around the dough products into a roll of packed biscuits. This requires a continuous and synchronous supply of products to be packaged. Not only the groups of products to be packed together should not differ in length, but the distance between the individual groups, being the pitch, should also remain the same. Finally, the speed of supply of the groups should correspond with the conveyor chain of the packaging machine. The conveyor chain of the packaging machine, also referred to as the packer chain runs at a constant, fixed speed through the packaging machine. Irregularities in supply from the furnaces are not resolved by such a packer machine due to the continues constant speed and pitch of the packer chain.

Such packer machines are complex and costly. The (economic) life time of such machines is long and it is therefore undesirable to replace the machines before the actual life time has expired. In addition, many factory are organized around the packer machine, which means that the packer machine is the most or one of the most important elements within a production line. Taking out of use, whether or not temporarily, of these machines not only brings the production line to a halt, but is also considered a radical action since other machines are often adjusted to the packer machine.

Hence, it is an object to connect and match a pre-existing supply chain from a furnace, in which the products are transported in a non-continuous manner and varying in pitch and speed, with a pre-existing packer machine with a packer chain which does not need any adjustment and is arranged to pack the products with a continuous and constant equal pitch and speed. Currently, known solutions in the form of conventional buffers prove to be inadequate, and there is a need for a retrofit solution by which in a simple, efficient design of such pre-existing furnace lines on the pre-existing continuous, synchronous packer chains can be connected.

As mentioned, the supply of the packaging machine from the production side of the dough products is not synchronous but asynchronous. There is a certain degree of fluctuation in the feed rate of the dough products by the transport device, as a result of the way in which the individual products are produced and further processed into groups of products.

The invention is based on the insight of than a device should be provided for matching an asynchronous supply of dough products into a synchronous supply in accordance with the packer chain of the packaging machine, in which such a synchronization system can be used as a retrofit solution in an existing production line of rolls or boxes of cookies and thus where the expensive packer machine does not require any adjustment and the synchronous, continuous, non-fluctuating speed and pitch of the packer chain can be used.

In order to solve the problem of synchronization a device could be provided for receiving individual dough products. The infeed chain of that machine therefore receives from the oven a quantity of dough products that correspond with the box. Then, this quantity of dough products, so the group dough products to be feed in a required conveyer speed in the conveyer chain of the packaging machine. The machine must then wait again until the next group of products is formed, and then a high acceleration is needed to reduce the pitch to correspond with the previous group of biscuits, into the required distance for the packaging machine. That is to say, the packaging machine requires a synchronous input, and if a first group of dough products is infeed, should at a fixed distance thereafter, being the pitch, the next group be infeed. However, this group must first be still formed from the individual products. During that time, the pitch between the first and second group of dough products increases. If the second group is then formed it should accelerate this group enormously to reduce the required distance of the increased pitch between with the first row. The result is that on the one hand due to the time required for forming the groups the speed of the packaging machine must be set relatively low, and on the other hand, the forces on the groups of dough products is too high, due to the high acceleration which in the machine, being on the conveyor chain, must be made.

Hence, in accordance with the invention, a synchronization system is provided for feeding groups of products for the manufacturing of rolls or boxes of cookies into a synchronous packer chain (i.e., a non-fluctuating packer chain in which the speed and pitch remain constant) of a packaging machine, which synchronization system does not have these disadvantages. Such a system for this purpose comprises a pair of devices. First, a transport device which comprises a conveyor chain. This conveyor chain is arranged to receive the individual dough products at an angle relative to the direction of movement of the conveyor chain. This angle is preferably about 90 degrees. Over the length of the conveyor chain, the dough products are transported in a certain amount of parallel oriented feed channels. If the final product, being the box of biscuits, for example, consists of a roll or box of 32 biscuits, then there are preferably at least 32 parallel feed channels. In each channel, a dough product is added to the group, which means that the group is built up at the end of the conveyor chain to a box or roll with, for example, 32 biscuits.

However, the groups of dough products are firstly not feed in a synchronized manner by the transport device but vary in speed an hence are not suitable for infeed into the conveyor chain of the packaging machine which is synchronous and does not vary in speed. Secondly, the dough products are oriented in a longitudinal manner. What is meant is that the group is transported in the longitudinal direction but the group is oriented in a transverse direction on the conveyor chain towards the packaging machine. However, a packaging machine is often arranged for a short side feed, which means that groups of products are required to be inlaid in a longitudinal and hence with the short side of the row towards the front.

Because the synchronization device is substantially oriented perpendicular to the conveyor chain of the conveyor, the groups of dough products can be taken over at right angles and, therefore, rotated in orientation 90 degrees relative to the direction of transport. That is to say, where the groups of dough products on the transport device are transported in the transverse direction over the conveyor chain, they are transported in the longitudinal direction on the device synchronization.

The groups of products are transferred as such on the synchronization device corresponding to the final composition and orientation as in the roll or the box of biscuits. That is to say, that the pack or group of products or stack is formed prior to, and not within the synchronization device. In presently known solutions the groups of products are only formed in accordance with the final product (roll or box biscuits) after they are transferred in a feeding device or on the final chain of the packer machine.

The synchronization device is arranged to be positioned between the conveying device and the packaging machine and serves two goals. Firstly, to make sure that the orientation of the products to be packed changes from a transverse direction towards a longitudinal direction, since that is the orientation in which the packaging machine is capable of handling the group of dough products and forming them into rolls or boxes of biscuits. This is achieved by taking over the products in a perpendicular direction between the conveyer members, and hence the direction of transport or conveyance of the synchronization device is rotated 90 degrees with respect to the conveyor chain and therefore transport direction of the transport device.

Secondly, the synchronization device serves the purpose of synchronizing the asynchronous supply or feed from the transport or conveyer device with the packer chain of the packaging machine, and in such a manner that it does not require modifications to the packer machine, e.g. in a retrofit manner, but can be connected without modifying the existing packer machines. To this end, the synchronization device is arranged to match the pitch, being the distance between two groups of dough products, and the transport speed with the pitch and transport speed of the packer chain. However, the device is further arranged to resolve any fluctuations in speed, since the speeds of the conveyor chain of the conveyor device and the packer chain of the packaging machine are in sync. Such fluctuations are present. The supply of the groups of dough products from the conveyor chain differs in speed, and fluctuates to some extent. Sometimes the speed of the conveyor chain higher than the speed of the packager chain, and sometimes the other way around.

In order to correct this fluctuation transport mechanism of the synchronization device is not formed as a chain or elements with similar evenly changing velocity, but is able to allow the mutual distance between the pairs of conveying members increase or decrease. In other words, in the case of a comparison with a chain, the synchronization device is able to increase or decrease the distance between the links of the chain with each other on an individual basis. Between a single pair of conveyor members a single group of dough products is received and transported towards the packaging machine. The distance between the one pair of conveyor members and the other pair of conveyor means, so the distance between one group of dough products and the other group dough products, is called the pitch. The conveyor members accumulate on one side of the synchronizing device at the location of the point of take-over/infeed with the transport device. Once the conveyor has transferred a group of dough products at right angles between two (a pair of) conveyer conveyor, the synchronization device causes this pair of conveyor members with the group dough products to move towards the packer chain. Until the members start to move, the distance between this pair of conveyor members, and the preceding pair of conveyor means increases. This preceding pair of conveyor means is, after all, in motion, and the other pair of conveyor means is still waiting until the group dough products has been taken over. Only then this pair of conveyor members got in queue with the preceding pair of conveyor means, at the predetermined transport speed and pitch in accordance with the speed and pitch of the packer chain. At the moment that the pair of conveyor members reach the packer chain, the conveying speed and the pitch with the preceding pair of conveyor means corresponds and is in sync with the predetermined pitch and conveying speed of the packager chain. Thus, the synchronization device synchronizes the asynchronous flow and the fluctuation in the speed of the groups of dough products as coming from the transport device, up to a synchronous flow in accordance with the transport speed and pitch of the packaging machine.

The forces acting on the rolls of biscuits due to the accelerations and decelerations are such that damage to the biscuits is reduced to a minimum. When the groups would be formed and not be feed as whole wherein the group was already accumulated (the group being a roll or box of a predetermined fixed amount of individual biscuits or other dough products), the pair of conveyor members of the synchronization device should hold until the group as a whole would have been completely formed into the group of products. In the meantime the preceding group is already transported according to the conveyance or transport speed of the packaging machine, and at the time when the group would be formed, it would have to reduce the distance between the groups by an enormous acceleration of the subsequent group to obtain the desired pitch. This results in an extreme acceleration and, therefore, tremendous forces which act on the products, with high chance of damage to the products as a result. This has again outage, shutdown of production and other adverse effects.

Since the synchronization device in a system according to the invention receives an already formed group of dough products, the speed of the conveyor device on the packaging machine can be synced by the synchronization device, and the synchronization device does only need to correct or sync for the difference in mutual pitch between the groups (e.g. fluctuation in speed) as a result of the asynchronous supply of the transport device.

According to the invention, the synchronization device further comprises, at the position of take-over of the groups of products by the synchronization device, a discharge or dump hatch, which discharge hatch is adapted to selectively discharge or dump a group of products out of the synchronization system.

The synchronization system preferably comprises a discharge hatch or dump hatch. This serves for the removal from the production process or dumping of incomplete or defective rolls or groups of products. A formed roll of individual products, e.g. a group of these individual products, could be incomplete, what means that the amount of individual products in the group is incorrect, however, the group can also contain one or more defective individual products, such as broken cookies. These groups of products are preferably removed from the production process by means of a discharge hatch or dump hatch. The hatch can be part of the transport device, but also as a separate unit that is accommodated between the transport and synchronization device. The discharge hatch, however, is preferably contained in the synchronization device. The conveyer or transport members, or pushers, are controlled by a control unit, and provide feedback. The control unit may determine whether the conveyer members are already experiencing any resistance at the expected time (position). This can be determined, for example, by the increase in current which is drawn from the power supply. If the resistance is not experienced at a certain moment when expected, for example when two conveying members are located at a distance corresponding to the width of the roll of products, it can be concluded that the group of products is incomplete. With that observation, the discharge valve or the dump hatch can be activated such that the incomplete group is dumped. The advantage is not only that thereby incomplete groups are prevented from simply being packed by the packer machine and continue the production line and further handling, but that the gap in the supply or feed due to the dumped group is removed by the device synchronization, by temporarily increasing the supply to the packer chain.

In an example, the conveying members of the synchronization device (20) rotate upwardly away in an endless chain at the location of the take-over of the groups of products by the packer chain of the packaging machine.

In an example, the conveying members of the synchronization device (20) rotate sideways in an endless chain at the location of the take-over of the groups of products by the packer chain of the packaging machine.

In particular, is it advantageous to add a discharge hatch in the transport of the device synchronization, when the conveying members of the synchronization device turn or rotate upwardly or sideways after having inserted or infeed the groups of products in the packer chain. That is to say, the packer chain transport the products in a transport or conveying direction towards the plastic packaging sleeve. This is done by placing the products on the upper side of the chain. At the end of the conveyor chain the conveyor chain is returned via the bottom, for example over a return element or tensioner. Usually, products are also conveyed in such a manner on the upper side of the belt between the drive roller and an idler pulley. The products are between the conveying means of the synchronization device, however, preferably not conveyed at the upper side, but at the side or at the bottom. In other words, the synchronization device and the packer may be arranged so that they are transported in a corresponding plane of rotation, wherein the rotational directions are opposite, and the packer at the top side of the chain moves the products in a conveying direction, and the conveying members of the synchronization device on the underside of the conveying members, move in the products in the same direction. Alternatively, the rotation planes could also be oriented perpendicular to one another, wherein the conveying members pivot towards the side and returned accordingly. The pivoting upwards is preferred because of the minimum influence on the transfer to the packer chain. It results in a better and shorter transfer period place wherein the conveying members no longer touch the products after they are transported by the packer chain.

In an example, the bearings of the conveying members over a rail is free of lubrication oil, which rail preferably comprises a material having a low coefficient of friction and, more particularly, one or more of the group consisting of polyoxymethylene, ultra high molecular weight polyethylene, polyamide, polytetrafluoroethylene, dry film lubrication, graphite, pertinax, NSF H1 lubricants and ISO 21469 certified materials.

Because food is transported, it is not desirable use conventional lubrication means. These may not come into contact with the food to be processed as they might be harmful for consumption. The conveying members are therefore preferably mounted in a dry manner without lubrication liquid wherein the rail on which they are moved and supported by and/or the conveying members are composed of a material having a low frictional resistance. For example, the material could be a polyoxymethylene material, but also other plastics such as pertinax or the like. These materials, moreover, have the advantages that they are electrically insulating and abrasion-resistant.

In an example, the groups of products are taken over by the synchronization device in the an amount and orientation of the individual products in accordance with the amount and orientation of corresponding with the packed rolls or box of biscuits from the packaging machine.

The apparatus is preferably arranged for the products to be grouped already in amount, composition and orientation according to or in accordance with how the products are packed as the final product. This is also called the roll construction. The roll construction has finished before the synchronization device takes over the roll, and preferably even prior to the transport device. Therefore, the synchronization device is not hindered by the fact that the rolls still need to be formed. Doing so takes time and can result in failure and malfunctioning.

In an example, the conveying device is arranged to at least substantially perpendicular to the conveying direction of the conveyor chain receive the individual products in parallel tracks to thus form the groups of products in accordance with the predetermined number of individual products for packaging thereof by the packaging machine.

The conveying device may be adapted to the group of products already to be received in an erected form from a preceding machine, but may also be arranged to form the group of products from a plurality of rows or tracks of individual products which are taken over in parallel at right angles to the conveying direction on the conveyor chain. At the beginning of the chain, the group comprises only a single individual product, and at the end of the chain, the group is composed entirely of, for example, 20 individual products. This according to the number of products that must later be packed into a box or roll cookies.

In an example, the synchronization device is arranged device to increases the pitch between a pair of conveyor members and its preceding pair until the group of products is received between the conveyer member pair and subsequently decrease the pitch to a predetermined size and a with the packer chain synchronized pitch before the group of products is taken over on the packer chain.

In a practical embodiment the individual conveying members of the synchronization device wait until a group of products is taken over from the conveyor chain of the conveyor device. Until that time, the conveyor members remain stationary. During that time, the pitch between these conveyor means (the pair between which the group of products is received), and a preceding pair of conveyor means, between which the preceding group of products has already been received, will increase. As soon as the group of products is inserted between the pair of conveyor members, the synchronization apparatus will accelerate this pair of conveyor members in order to decrease the pitch with the preceding pair and, ultimately, slowing down again to the transporting speed of the packager chain when the desired pitch is reached.

In an example, the synchronization device is arranged to reduce the pitch between a pair of conveyor members and its preceding pair of conveyor means by a linear acceleration and then linear deceleration of the pair of conveyor members with respect to the preceding pair of conveyor members.

In an example, the synchronization device is arranged to reduce the pitch between a pair of conveyor members and its preceding pair of conveyor members by an exponential acceleration and then exponential deceleration of the pair of conveyor members with respect to the preceding pair of conveyor members.

The acceleration and subsequent deceleration of the pairs of conveyor members can be carried out by means of a linear acceleration or by means of an exponential acceleration. An exponential acceleration has the advantage that the forces acting on the products increase gradually, which will result in less damage to the products. Combination are also possible. For example, an exponential acceleration and linear deceleration or otherwise.

In an example, the synchronization device is arranged for determining the predetermined pitch and conveying speed of the pairs of conveying members on the basis of the pitch and conveying speed of the packer chain of the packaging machine, and wherein the synchronization device preferably is arranged to follow the conveying speed of the packager chain adaptively, and preferably to increase or to decrease the transport speed of the packer chain of the packaging machine.

The synchronization device can be set to correspond with the pitch and conveying speed (and position / status of the chain) of the packaging machine. Both devices may also be interconnected, wherein the synchronization device can read out the pitch and / or conveying speed of the packaging machine. Preferably, the synchronization device is control the packaging machine to step wise or gradually increase or decrease the speed. This allows differences, hence not a fluctuation in processing speed (transport speed) between both machines, to be matched.

In an example, the synchronization device is arranged for containing, and selecting by a user, of a plurality of programs, wherein the plurality of programs includes at least a description of the products to be packed together with a corresponding pitch and conveying or transport speed of the packager or packer chain of the packaging machine, and preferably, the amount of individual items in this group of products.

The synchronization device may include multiple programs. For example, for round shaped biscuits, square biscuits, rolls of 32 cookies, boxes containing 20 biscuits etc. This makes such a synchronization device versatile. After all, the same synchronization device can be used in different production lines and production lines which are make different products. Once the product to be produced changes, a corresponding program is selected, on which basis the synchronization device knows the size of the group of products, how many individual products are contained therein, and what the pitch and transport speed is at which the packaging of the groups of product into rolls or wrapped biscuits takes place.

In an example, the individual products include biscuits, cookies, chocolate coated sandwiched cookies or a variant thereof in a round, square, rectangular or other shape. The synchronization device is able to handle various forms and types of dough products for infeed into the packer chain. It being cookies, biscuits or related products, hence in round, square, rectangular or any form.

In an example, the length of the synchronization device is matched with the fluctuation in the speed of the conveyor chain of the roll formation device, and wherein as the length is preferably between 1 and 7 meters, more preferably between 2 and 5 meters, and still more preferably between 2.5 and 4 meters.

The length of the synchronization device defines, based in part on the speed of the packager chain, the time in which the synchronization device can synchronize the output from the conveyor to the supply in the packer chain. If the fluctuations in speed between the two machines is large, this can be taken care of by increasing the length of the synchronization device. Increase in length without an increase in fluctuation in speed between the two machines on the other hand allows for a smaller acceleration and deceleration less force operation leads to the products, then less damage thereto as a result.

In an example, the number of pairs of conveyor members of the synchronization device is in accordance with the fluctuation in the speed of the conveyor chain of the roll assembling device, and wherein the amount of conveyor member pairs preferably lies between the 4 and 50, more preferably between 8 and 40 meters, and even more preferably between 10 and 30.

In an example, the transport device and synchronization device are positioned in such a way relative to each other that the groups of products are taken over from the top of the pairs of conveyor members.

In an example, the groups of products fall over a tilted plate from the conveyor chain between the pairs of conveyor members downwards.

In an example, the synchronization device is adapted to move to the conveyer members of a pair of conveyor members towards each other in order to clamp the group of products for transportation, after takeover of a group of products.

In an example, the synchronization device comprises linear induction motors for driving the transporting members.

### Brief description of the figures

Figures 1a, 1b and 1c show, in different perspective views, a system according to an example of the invention, consisting of a transport device and a synchronization device;
Figures 2a, 2b and 2c show, in different perspective views, a system according to an example of the invention, consisting of a transport device and a synchronization device with a different orientation.

### Detailed description of the figures

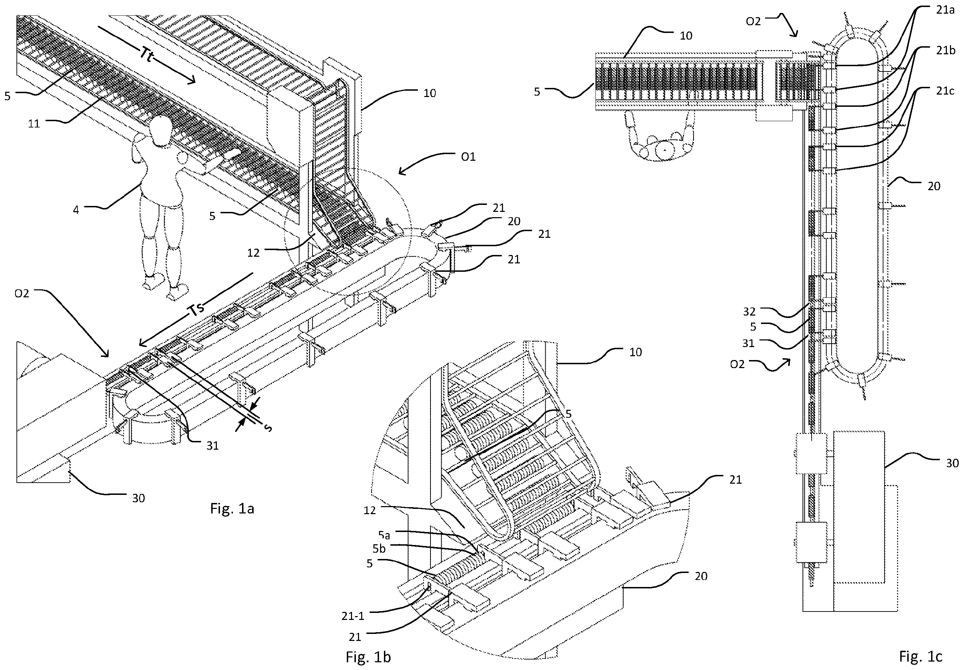

Figure 1a shows an example of a system in a practical embodiment of the invention. The system basically consists of two devices / machines, i.e. transport device 10 and the synchronization device 20. The synchronization is obtained between the conveyor 10 and the packaging machine 30.

The system 10, 20 is arranged for dough products such as cookies, biscuits, sandwich biscuits and the like, to process and to feed in in the packer chain 31 of the packaging machine 30. The packer chain is rotating at a continuous speed and wraps film around a group of dough products 5. In the case of the examples shown in the figures, round biscuits. Each group 5 is composed of a fixed number of, in this case 16, individual biscuits 5a, 5b, etc., which are on their side in a group invoked as a roll from the factory, and feed in the conveyor chain 11 of the transport device, and in the same shape but different orientation, inlaid into the packer chain.

The individual dough products are produced by a furnace, not shown. Thereafter, these are cooled and added in parallel channels or tracks on the conveyor chain 11 of the transport device 10. At the end of the conveyor chain 11, so at the location of the take-over point O1, the roll is formed of the group of dough products 5. The conveyor chain is an endless conveyor chain which, as can be seen in Figure 1a, is returned at the topside.

The dough products 5a, 5b, etc., are moved as a complete group of products 5 at the takeover point O1 by the conveyor chain 11 by means of an inclined plate 12 to the synchronization device. Such supply can be considered to be in correspondence with the speed of the packaging machine, but in practice, it appears that there is also often a deviation, and above all a fluctuation in speed. Thus, at some moments in time the conveyor chain 11 is halted and other moments the speed is higher than the speed of the packaging machine 30. In order to compensate for these fluctuations, the system is provided with a synchronization device 20 according to an aspect of the invention.

The synchronization device to this end comprises a number of separate conveying means, elements or members 21. This form at the takeover point a pair 21a, 21b, 21c, etc. These pairs can be controlled independently of each other by the synchronization device, and thus serve as a self-propelled individual trains with the groups dough products 5, which groups are individually wrapped into a roll or box of cookies by the packaging machine 30.

At the transfer point O1 the synchronization device 20 receives a group of dough products 5 between a pair of transport or conveyer members 21a. Until the time that this group has been received, the members stand still. Alternatively, the first member (in transport direction Ts) is stopped to wait until the group is inserted, and only then the second member will join and clamp and further transports the group. In both cases, the group of products will be moved by the pair of conveyor members 21a towards the packer chain 31. However, the distance to the preceding train, being the foregoing pair of conveyor means, is increased with respect to the previous group of dough products. This distance will be reduced again to the desired pitch S and transport speed of the packer 31. The chain synchronization device has time until the hand over O2 to the packager chain 31 to achieve the desired pitch and transport speed.

To this end, the synchronization apparatus will bring the speed of the pair of conveyor means or members with the first group of dough products at an acceleration above the speed of the preceding group and the pair of conveyor members, in order to reduce the distance between the two pairs of conveying members. At the moment that the desired distance between them, being pitch S, is going to be achieved, it is gradually decelerated to the desired speed of the conveyor chain. Then the groups of products are synchronized for the packer chain 31.

In the example as shown in Figures 1a, 1b, 1c, the synchronization device is positioned laterally and partially parallel to the packager chain. At take-over point O2 of the packaging machine 30, the groups of dough products 5 are taken along by conveyor members 32 to the packaging chain 31. This by conveying members 32 of the packaging chain 31 to take the transport of the groups over of the conveying elements 21 of the synchronization device 20. As soon as the group is carried along by the conveying members 32 of the packaging chain 31, the conveying members 21 of the synchronization device 21 deflect sideways in order to rejoin with the other conveyor members at the beginning of the synchronization on position of the take-over point O1 with the conveyor chain 11. As an alternative, the synchronization device 20 can also be disposed in line and completely in line with the packer chain 31. In addition, the transporting members 21 of the device synchronization will 20 then will be taken over at the bottom side at take-over point O1 and in inlaid into the packaging chain at take-over point O2. In this case, therefore, the conveying members 21 do not deflect or rotate sideways after take-over at O2, but deflect towards the bottom of the synchronization device in order to return via the bottom to the take-over point O1.

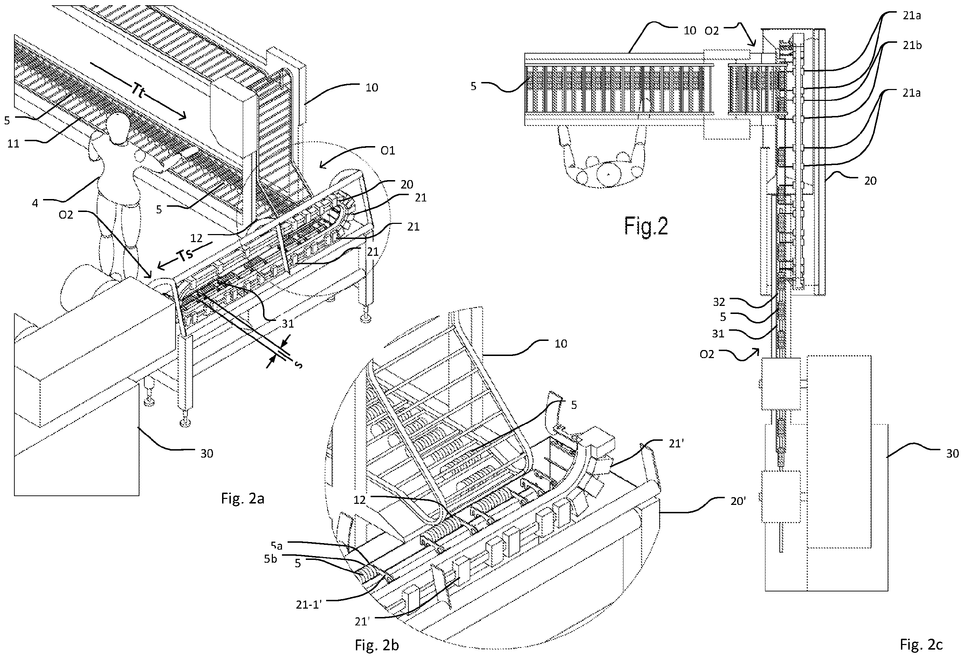

From the detail Figure 1b it can be clearly seen that the conveying members 21 are formed as a comb with two teeth, wherein a recess 21-1 between the two teeth exist. This recess corresponds to the transporting members 32 of the packer chain 31. This makes it easy to deflect at the takeover point O2. As such, the conveyor means 21 of the synchronization device 20 coincide at transfer point Ts with the conveyor members 32 of the packer chain 31. After acquisition, the group of products is only carried by the conveyor members 32 of the packer chain 31 and the transportation means 21 of the synchronization device 20 deflect from the conveying surface sideways, and are fed back in a parallel return plane which is perpendicular to the plane of rotation of the packer chain. In the other embodiment, the groups of products are also transported along the side by the movers of the conveyor members but the conveyor members 21 of the synchronization device 20 at take-over point Ts will deflect upwardly away from the transport plane and be fed parallel to the upper side to return in the same plane as the plane of rotation of the packer chain. This embodiment is illustrated in Figures 2a, 2b, and 2c.

In the Figures 2a, 2b, 2c another example of a system is shows in accordance with a practical embodiment of the invention. The system basically consists of two devices / machines, i.e. transport device 10 and the synchronization device 20', just as the embodiment shown in Figures 1a, 1b, 1c. The synchronization is arranged between the conveyor 10 and the packaging machine 30. This synchronization device 20', however, has a different orientation, wherein the conveyer members 21' are formed such that they consist of pushers or movers which move the groups of products 5 horizontally in a direction of transport Ts towards the direction of the packer 30. These conveyor members 21', however, in this example, deflect upwards, which can be seen clearly in the detail figure 2b. In addition, the transporting means are arranged for horizontal orientation and displacement in the horizontal plane and being the plane of rotation of the transporting members oriented vertically in which the transporting means 21' at the location of the take-over point O2 rotate or deflect upwards to be fed back to take-over point O1. At the transfer point O1 the movers of the packer chain 31 are joggled or cogged between the pitch S of the pairs of conveyer elements 31 such that these are infeed in a fluid motion and taken over by the packer chain. After acquisition at take-over point O2 the movers of the conveyer elements deflect from the plane of the transport direction TS upwardly or towards the side.

Although the invention is set put on the basis of a number of the aforementioned examples, the invention is by no means limited to such applications. The skilled person can apply, on the basis of the following claims, without inventive work, modifications and variations, which are all be deemed to be comprised by the appending claims.

## Claims

1. Synchronization system (10, 20) for infeed into a synchronous packer chain of a packaging machine (30) of groups of products (5) for the manufacturing of rolls or boxes of cookies, each of the group consisting of a predetermined amount of individual products (5a, 5b, ...) such as biscuits or cookies, the system comprising:
- a transport device (10), comprising a conveyor chain (11) arranged to transport said groups of products (5) in a transverse direction relative to a conveying direction (Tt) of said conveyor chain towards a synchronous packer chain of said packaging machine;
- a synchronization device (20), arranged to be positioned between said transport device (10) and said packaging machine (30), and comprising a plurality of conveyer members (21) for taking over said groups of products (5) between pairs (21a, 21b, 21c, ..., 21x) of said plurality of conveyer members in a direction perpendicular to said conveyer chain (11) in a longitudinal direction in respect to said conveying direction (Ts) of said conveying members (21), wherein said synchronization device (20) is further arranged to synchronize said groups of products (5) at predetermined mutually equal pitch, and transfer speed with a constant pitch (S) and conveying speed of said synchronous packer chain (31) for accordingly take over by said packer chain (31) of said groups of products (5) by, during the time of taking over (O1) said group of products from said conveyer chain and the moment of taking over (O2) by said packer chain, increasing and/or decreasing said pitch between said pairs of conveyer members (21, 21b, 21c, ..., 21x),
**characterized in that** said
synchronization device (10) further comprises a discharge hatch positioned at said take over of said groups of products by said synchronisation device, wherein said discharge hatch is arranged to selectively discharge a group of products from said synchronization system, and wherein the synchronization device is controlled to remove a gap in the supply due to a discharged group by temporarily increasing the supply to the packer chain to synchronize with the packer chain.

## Patentansprüche

1. Synchronisationssystem (10, 20) zum Zuführen von Gruppen von Produkten (5) für die Herstellung von Rollen oder Schachteln von Keksen in eine synchrone Förderkette einer Verpackungsmaschine (30), wobei jede Gruppe aus einer vorbestimmten Menge von einzelnen Produkten (5a, 5b, ...) wie beispielsweise Plätzchen oder Keksen besteht, wobei das System Folgendes umfasst:
eine Transporteinrichtung (10), die eine Transportkette (11) umfasst, welche zum Transportieren der Gruppen von Produkten (5) in einer Querrichtung bezüglich einer Förderrichtung (Tt) der Transportkette zu einer synchronen Förderkette der Verpackungsmaschine angeordnet ist;
eine Synchronisationseinrichtung (20), die zur Positionierung zwischen der Transporteinrichtung (10) und der Verpackungsmaschine (30) angeordnet ist und mehrere Förderglieder (21) zum Übernehmen von Gruppen von Produkten (5) zwischen Paaren (21a, 21b, 21c, ..., 21x) der mehreren Förderglieder in einer Richtung senkrecht zu der Transportkette (11) in einer Längsrichtung bezüglich der Förderrichtung (Ts) der Förderglieder (21) umfasst, wobei die Synchronisationseinrichtung (20) ferner dazu angeordnet ist, die Gruppe von Produkten (5) in/mit einem/einer vorbestimmten gleichen Abstand zueinander und Übergabegeschwindigkeit mit einem konstanten Abstand (S) und Fördergeschwindigkeit der synchronen Förderkette (31) zur entsprechenden Übernahme durch die Förderkette (31) der Gruppen von Produkten (5) anzuordnen, indem zum Zeitpunkt der Übernahme (O1) der Gruppe von Produkten von der Transportkette und in dem Moment der Übernahme (O2) durch die Förderkette der Abstand zwischen den Paaren von Fördergliedern (21a, 21b, 21c, ..., 21x) vergrößert und/oder verkleinert wird, **dadurch gekennzeichnet, dass**
die Synchronisationseinrichtung (10) ferner eine Abführklappe umfasst, die an der Übernahme der Gruppe von Produkten durch die Synchronisationseinrichtung positioniert ist, wobei die Abführklappe dazu angeordnet ist, eine Gruppe von Produkten selektiv aus dem Synchronisationssystem abzuführen, und wobei die Synchronisationseinrichtung dazu gesteuert wird, eine Lücke in der Zufuhr aufgrund einer abgeführten Gruppe zu beseitigen, indem sie die Zufuhr zu der Förderkette zum Synchronisieren mit der Förderkette vorübergehend erhöht.

## Revendications

1. Système de synchronisation (10, 20) pour l'alimentation d'une chaîne d'emballage synchrone d'une machine à emballer (30) en groupes de produits (5) pour la fabrication de rouleaux ou de boîtes de biscuits, chacun du groupe consistant en une quantité prédéterminée de produits individuels (5a, 5b, ...) tels que des biscuits ou des petits gâteaux, le système comprenant :
- un dispositif de transport (10), comprenant une chaîne transporteuse (11) agencée pour transporter lesdits groupes de produits (5) dans une direction transversale par rapport à une direction de transport (Tt) de ladite chaîne transporteuse vers une chaîne d'emballage synchrone de ladite machine à emballer ;
- un dispositif de synchronisation (20), agencé pour être positionné entre ledit dispositif de transport (10) et ladite machine d'emballage (30), et comprenant une pluralité d'élément de transport (21) pour la prise desdits groupes de produits (5) entre des paires (21a, 21b, 21c, ..., 21x) de ladite pluralité d'éléments de transport dans une direction perpendiculaire à ladite chaîne transporteuse (11) dans une direction longitudinale par rapport à ladite direction de transport (Ts) desdits éléments de transport (21), dans lequel ledit dispositif de synchronisation (20) est en outre agencé pour synchroniser lesdits groupes de produits (5) à un pas prédéterminé mutuellement égal, et une vitesse de transfert à pas constant (S) et une vitesse de transport de ladite chaîne d'emballage synchrone (31) pour la prise par conséquent, par ladite chaîne d'emballage (31), desdits groupes de produits (5) en, pendant le temps de prise (O1) dudit groupe de produits de ladite chaîne transporteuse et l'instant de prise (O2) par ladite chaîne d'emballage, augmentant et/ou diminuant ledit pas entre lesdites paires d'éléments de transport (21, 21b, 21c, ...., 21x), **caractérisé en ce que**
ledit dispositif de synchronisation (10) comprend en outre une trappe de décharge positionnée au niveau de ladite prise desdits groupes de produits par ledit dispositif de synchronisation, dans lequel ladite trappe de décharge est agencée pour décharger sélectivement un groupe de produits dudit système de synchronisation, et dans lequel le dispositif de synchronisation est commandé pour supprimer un écart d'alimentation dû à un groupe déchargé en augmentant temporairement l'alimentation de la chaîne d'emballage pour se synchroniser avec la chaîne d'emballage.
